(19) **Europäisches Patentamt**
**European Patent Office**
**Office européen des brevets**

(11) **EP 2 856 318 B1**

(12) **EUROPEAN PATENT SPECIFICATION**

(45) Date of publication and mention
of the grant of the patent:
**11.05.2016 Bulletin 2016/19**

(51) Int Cl.:
***G06F 11/14*** *(2006.01)*   ***G06F 11/20*** *(2006.01)*

(21) Application number: **13728570.6**

(22) Date of filing: **15.05.2013**

(86) International application number:
**PCT/US2013/041042**

(87) International publication number:
**WO 2013/184309 (12.12.2013 Gazette 2013/50)**

(54) **METHOD AND APPARATUS FOR SINGLE POINT OF FAILURE ELIMINATION FOR CLOUD-BASED APPLICATIONS**

VERFAHREN UND VORRICHTUNG ZUR BEHEBUNG VON EINZELPUNKTFEHLER BEI CLOUDBASIERTE ANWENDUNGEN

MÉTHODE ET DIPSOSITIF D'ÉLIMINATION D'ERREUR PONCTUELLE SIMPLE POUR APPLICATIONS NUAGIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.06.2012 US 201213487506**

(43) Date of publication of application:
**08.04.2015 Bulletin 2015/15**

(73) Proprietor: **ALCATEL LUCENT**
**92100 Boulogne-Billancourt (FR)**

(72) Inventors:
• **BAUER, Eric, J.**
**Murray Hill, NJ 07974-0636 (US)**

• **ADAMS, Randee, S.**
**Naperville, IL 60563-1443 (US)**
• **CLOUGHERTY, Mark**
**Murray Hill, NJ 07974-0636 (US)**

(74) Representative: **Knecht, Ulrich Karl et al**
**Alcatel Lucent**
**Intellectual Property & Standards**
**70430 Stuttgart (DE)**

(56) References cited:
**WO-A2-2012/048014   US-A1- 2011 265 168**
**US-A1- 2011 289 205   US-A1- 2012 054 409**

Description

TECHNICAL FIELD

The invention relates generally to methods and apparatus for providing single point of failure elimination for cloud-based applications.

BACKGROUND

This section introduces aspects that may be helpful in facilitating a better understanding of the invention. Accordingly, the statements of this section are to be read in this light and are not to be understood as admissions about what is in the prior art or what is not in the prior art.

In some known high availability systems, the network architecture is explicitly designed to contain sufficient redundancy to ensure that no single point of failure (SPOF) exists in the provisioned network. In some known cloud-based systems, anti-affinity rules are applied to ensure that there is "no SPOF" between application Virtual Machine (VM) instances and physical host mappings.

Document US 2011/0265168 A1 discloses a cloud computing environment comprising a health manager which is run in one or more virtual machines and that tracks and maintains the "health" of cloud computing environment by monitoring messages broadcast on addressing and discovery layer by other components of cloud computing environment.

The health manager may notice the failure of an instance of a deployed web application and automatically broadcast a request to cloud controller to restart the web application. Similarly, the health manager may be further configured to itself initiate the re-starting of failed available services or other components of cloud computing environment such as e.g., cloud controller, service provisioner, router, etc...

SUMMARY

Various embodiments provide a method and apparatus of providing SPOF elimination for cloud-based applications that provide rules supporting rapid elasticity and infrastructure growth. In particular, the SPOF elimination provided by the method and apparatus is based on network architecture and persistent storage considerations in addition to VM to host instance mappings.

In one embodiment, an apparatus is provided for providing single point of failure elimination. The apparatus includes a data storage and a processor communicatively connected to the data storage. The processor is programmed to: determine one or more application resource requirements; determine a resource pool and a network architecture associated with the resource pool; determine one or more rules; and determine a distribution of one or more component instances based on the one or more application resource requirements, the resource pool, the network architecture and the one or more rules.

In any of the above embodiments, the processor is further programmed to determine a network status of one or more of the links and nodes and further base the determination of the distribution of the one or more component instances on the network status.

In a second embodiment, a system is provided for providing single point of failure elimination. The system includes: one or more data centers, the one or more data centers including a resource pool and a cloud manager communicatively connected to the plurality of data centers. The cloud manager is programmed to: determine one or more application resource requirements; determine the resource pool and a network architecture associated with the resource pool; determine one or more rules; and determine a distribution of one or more component instances based on the one or more application resource requirements, the resource pool, the network architecture and the one or more rules.

In a third embodiment, a method is provided for providing single point of failure elimination. The method includes: determining that a distribution trigger has occurred; determining one or more application resource requirements; determining a resource pool and a network architecture associated with the resource pool; determining one or more rules; and determining a distribution of one or more component instances based on the distribution trigger, the one or more application resource requirements, the resource pool, the network architecture and the one or more rules.

In any of the above embodiments, the distribution trigger is based on migrating at least a portion of the component instances from one or more resources in the resource pool.

In any of the above embodiments, determining the network architecture comprises parsing a network architecture representation.

In any of the above embodiments, the one or more rules include one or more anti-affinity rules and determining the one or more anti-affinity rules comprises parsing an anti-affinity rules representation.

In any of the above embodiments, the method further includes determining a network status of one or more links or network nodes, where the network architecture comprises the one or more links or network nodes; and the step of determining the distribution of the one or more component instances is further based on the network status.

In any of the above embodiments, the network architecture comprises a first network device; and determining the distribution of one or more component instances includes determining that a first component instance of the one or more component instances may not be associated with a first resource in the resource pool based on determining that a failure of the first network device would violate at least one of the one or more anti-affinity rules.

In any of the above embodiments, the step of determining the distribution of one or more component instances comprises using an objective function.

In any of the above embodiments, the objective function minimizes application access delays

In any of the above embodiments, the network architecture includes links and network nodes.

In any of the above embodiments, the one or more application resource requirements includes a current allocation of one or more resources, the one or more resources being members of the resource pool; and one or more current application resource requirements, the one or more current application resource requirements associated with an application.

In any of the above embodiments, the determination of the one or more application resource requirements is based on an application resource request received from the application.

In any of the above embodiments, the determination of the one or more application resource requirements includes programming the processor to monitor a resource usage of the application.

In any of the above embodiments, the one or more rules include one or more anti-affinity rules.

In any of the above embodiments, the one or more rules further include one or more business rules.

In any of the above embodiments, the one or more business rules include a reservation of a portion of resources in the resource pool for maintenance actions.

In any of the above embodiments, the determination of the distribution of one or more component instances is further based on a set of failure points.

According to the present invention, there is proposed an apparatus for providing single point of failure elimination according to claim 1 and a method according to claim 9.

Dependent claims relate to preferred embodiments of the present invention.

## BRIEF DESCRIPTION OF THE DRAWINGS

Various embodiments are illustrated in the accompanying drawings, in which:

FIG. 1 illustrates a cloud network that includes an embodiment of a SPOF elimination system 100 for cloud-based applications;
FIG. 2 schematically illustrates a data center 200A and a portion of a network 200B that are an embodiment of one of data centers 150 and a portion of network 140 of FIG. 1;
FIG. 3 depicts a flow chart illustrating an embodiment of a method 300 for a cloud manager (e.g., cloud manager 130 of FIG. 1) to distribute component instances in the SPOF elimination system 100 of FIG. 1;
FIG. 4 depicts a flow chart illustrating an embodiment of a method 400 for a cloud manager (e.g., cloud manager 130 of FIG. 1) to determine rules as illustrated in step 340 of FIG. 3;
FIG. 5A illustrates reliability block diagram of an exemplary application requiring component instances $A_1$ - $A_2$ and $B_1$ - $B_4$;
FIG. 5B illustrates an initial component instant assignment of component instances $A_1$ - $A_2$ and $B_1$ - $B_3$;
FIG. 5C illustrates the assignment of component instance $B_4$ in a first exemplary distribution of component instances 500A of FIG. 5A;
FIG. 5D illustrates the assignment of component instance $B_4$ in a second exemplary distribution of component instances 500A of FIG. 5A; and
FIG. 6 schematically illustrates an embodiment of various apparatus 600 such as one of cloud manager 130 of FIG. 1.

To facilitate understanding, identical reference numerals have been used to designate elements having substantially the same or similar structure or substantially the same or similar function.

## DETAILED DESCRIPTION OF ILLUSTRATIVE EMBODIMENTS

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Additionally, the term, "or," as used herein, refers to a non-exclusive or, unless otherwise indicated (e.g., "or else" or "or in the alternative"). Also, the various embodiments described herein are not necessarily mutually exclusive, as some embodiments can be combined with one or more other embodiments to form new embodiments.

Various embodiments provide a method and apparatus of providing SPOF elimination for cloud-based applications that provide rules supporting rapid elasticity, infrastructure maintenance such as, for example, software/firmware/hardware upgrades, updates, retrofit, and growth, and preventative maintenance such as, for example, cleaning fan filters and replacing failed hardware components. In particular, the SPOF elimination provided by the method and apparatus is based on network architecture and persistent storage considerations in addition to VM to host instance mappings.

The terms "no SPOF" and "SPOF elimination" as used herein means that no single component failure shall cause an unacceptable service impact. For example, a telephony service provider may accept a dropped call, but may not accept a prolonged service outage where the redial of the dropped call can not be completed because a single failure event impacted both the primary/active service component as well as the secondary/redundant service component, and thus no component is available or has sufficient capacity to serve user requests within a defined threshold period. It should be appreciated that a failure of an automatic failure detection mechanism or automatic recovery mechanism may preclude activation of service recovery mechanisms and result in a prolonged service failure and is beyond the scope of a "no SPOF" requirement.

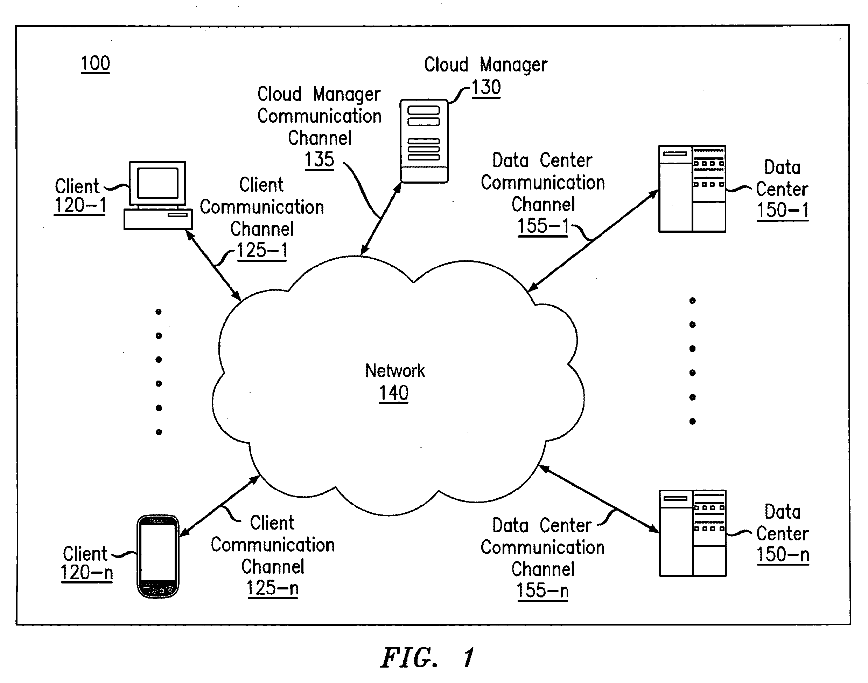

FIG. 1 illustrates a cloud network that includes an embodiment of a SPOF elimination system 100 for cloud-based applications. The SPOF elimination system 100 includes one or more clients 120-1 - 120-n (collectively, clients 120) accessing one or more allocated application instances (not shown for clarity) residing on one or more of data centers 150-1 - 150-n (collectively, data centers 150) over a communication path. The communication path includes an appropriate one of client communication channels 125-1 - 125-n (collectively, client communication channels 125), network 140, and one of data center communication channels 155-1 - 155-n (collectively, data center communication channels 155). The application instances are allocated in one or more of data centers 150 by a cloud manager 130 communicating with the data centers 150 via a cloud manager communication channel 135, the network 140 and an appropriate one of data center communication channels 155.

Clients 120 may include any type of communication device(s) capable of sending or receiving information over network 140 via one or more of client communication channels 125. For example, a communication device may be a thin client, a smart phone (e.g., client 120-n), a personal or laptop computer (e.g., client 120-1), server, network device, tablet, television set-top box, media player or the like. Communication devices may rely on other resources within exemplary system to perform a portion of tasks, such as processing or storage, or may be capable of independently performing tasks. It should be appreciated that while two clients are illustrated here, system 100 may include fewer or more clients. Moreover, the number of clients at any one time may be dynamic as clients may be added or subtracted from the system at various times during operation.

The communication channels 125, 135 and 155 support communicating over one or more communication channels such as: wireless communications (e.g., LTE, GSM, CDMA, Bluetooth); WLAN communications (e.g., WiFi); packet network communications (e.g., IP); broadband communications (e.g., DOCSIS and DSL); storage communications (e.g., Fibre Channel, iSCSI) and the like. It should be appreciated that though depicted as a single connection, communication channels 125, 135 and 155 may be any number or combinations of communication channels.

Cloud Manager 130 may be any apparatus that allocates and de-allocates the resources in data centers 150 to one or more application instances. In particular, a portion of the resources in data centers 150 are pooled and allocated to the application instances via component instances. It should be appreciated that while only one cloud manager is illustrated here, system 100 may include more cloud managers.

The term "component instance" as used herein means the properties of one or more allocated physical resource reserved to service requests from a particular client application. For example, an allocated physical resource may be processing/compute, memory, networking, storage or the like. In some embodiments, a component instance may be a virtual machine comprising processing/compute, memory and networking resources. In some embodiments, a component instance may be virtualized storage.

The network 140 includes any number of access and edge nodes and network devices and any number and configuration of links. Moreover, it should be appreciated that network 140 may include any combination and any number of wireless, or wire line networks including: LTE, GSM, CDMA, Local Area Network(s) (LAN), Wireless Local Area Network(s) (WLAN), Wide Area Network (WAN), Metropolitan Area Network (MAN), or the like.

The data centers 150 may be geographically distributed and may include any types or configuration of resources. Resources may be any suitable device utilized by an application instance to service application requests from clients 120. For example, resources may be: servers, processor cores, memory devices, storage devices, networking devices or the like.

In some embodiments, cloud manager 130 may be a hierarchical arrangement of cloud managers.

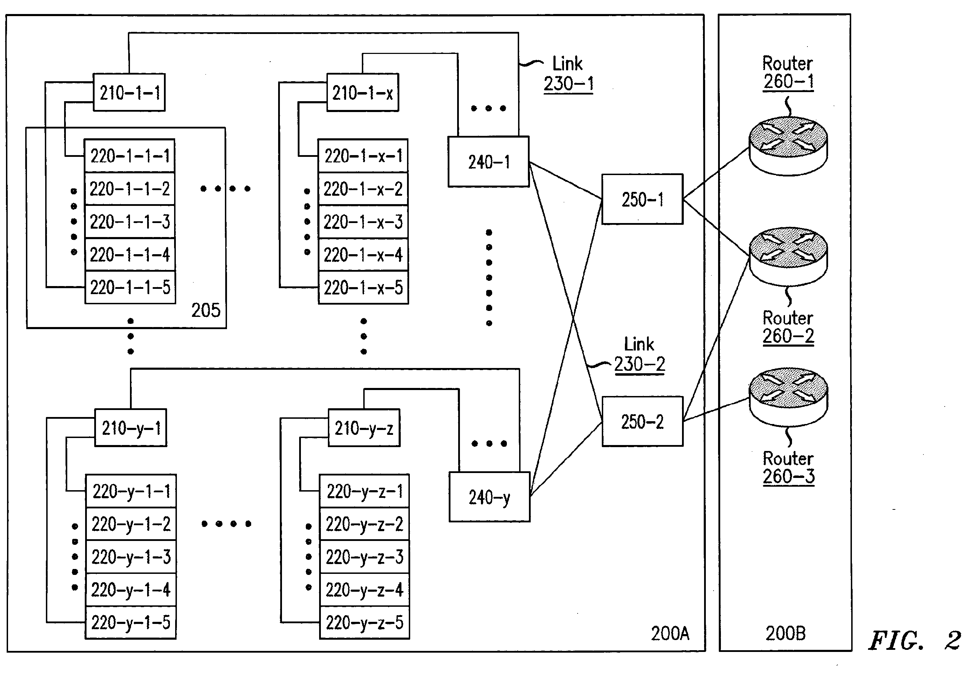

FIG. 2 schematically illustrates a data center 200A and a portion of a network 200B that are an embodiment of one of data centers 150 and a portion of network 140 of FIG. 1. The data center 200A includes the resources 220-1-1-1 - 220-y-z-5 (collectively, resources 220). Resources 220 are arranged in "y" rows, where each row contains a number (e.g., illustratively "x" or "y") of racks of resources (e.g., rack 205) that are accessed through a communication path. The communication path communicatively connects resources 220 with network 200B via an appropriate one of the top of the rack switches 210-1-1 - 210-y-z (collectively, TOR switches 210), an appropriate one of the end of the row switches 240-1 - 240-n (collectively, EOR switches 240), an appropriate one of the layer 2 aggregation switches 250-1 - 250-n (collectively, aggregation switches 250) and appropriate links 230-1 - 230-2 (collectively, links 230) (remaining link labels have been omitted for the purpose of clarity). Communication between data center 200A and network 200B is via one of aggregation switches 250, an appropriate one of routers 260-1 - 260-3 (collectively, routers 260), and appropriate links 230. It should be appreciated that a data center may be architected in any suitable configuration and that data center 200A is just one exemplary architecture being used for illustrative purposes. For example, the communication path may include any suitable configuration of devices (e.g., switches, routers, hubs, and the like) to switch data between the resources 220 and network 200B.

TOR switches 210 switch data between resources in an associated rack and an appropriate EOR switch. For example, TOR switch 210-1-1 switches data from resources in rack 205 to network 200B via an appropriate EOR switch (e.g., EOR switch 240-1).

Resources 220 may be any suitable device as described herein. It should be appreciated that while 5 resources are illustrated in each rack (e.g., rack 205), each rack may include fewer or more resources and that each rack may contain different types or numbers of resources.

As illustrated, each resource 220 is labeled using a row-column-resource number nomenclature. For example, resource 220-2-3-4 would be the fourth resource in the rack residing in the second row and third column.

EOR switches 240 switch data between an associated TOR switch and an appropriate aggregation switch. For example, EOR switch 240-1 switches data from TOR switches 210-1-1 - 210-1-x to network 200B via an appropriate aggregation switch (e.g., aggregation switch 250-1 or 250-2).

Aggregation switches 250 switch data between EOR switches (e.g., rack 205) and an appropriate router. For example, TOR switch 210-1-1 switches data from resources in rack 205 to network 200B via an appropriate EOR switch (e.g., EOR switch 240-1) and an appropriate aggregation switch (e.g., aggregation switch 250-1 or 250-2).

Routers 260 switch data between network 200B and data center 200A via an appropriate aggregation switch. For example, router 260-1 switches data from network 200B to data center 200A via aggregation switch 250-1.

In some embodiments, TOR switches 220 or EOR switches 240 are Ethernet switches.

In some embodiments, TOR switches 220 or EOR switches 240 may be arranged to be redundant. For example, rack 205 may be serviced by two or more TOR switches 210.

In some embodiments, aggregation switches 250 are layer 2 Ethernet switches.

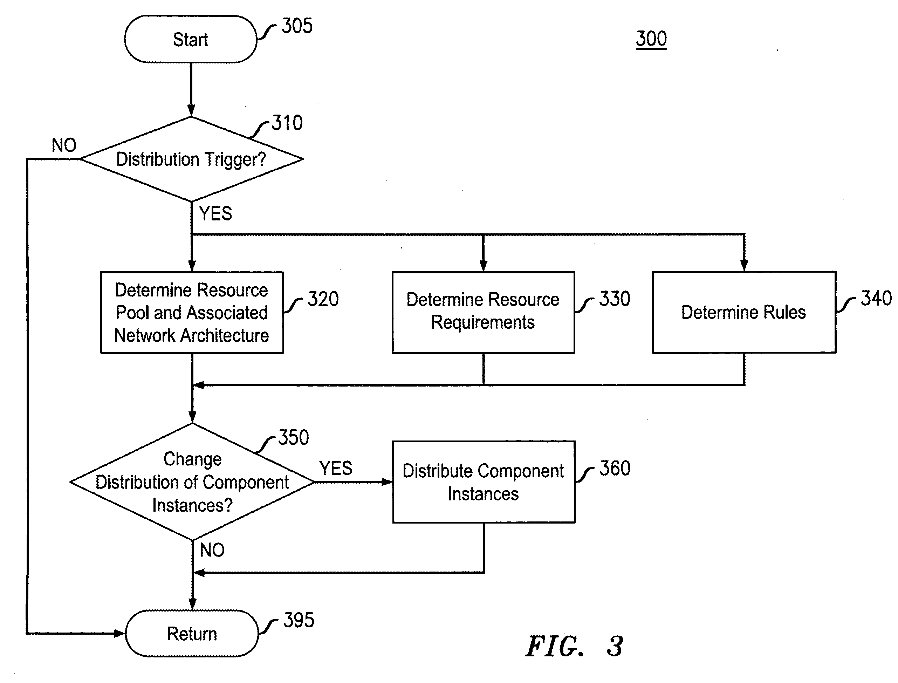

FIG. 3 depicts a flow chart illustrating an embodiment of a method 300 for a cloud manager (e.g., cloud manager 130 of FIG. 1) to distribute (e.g., allocate or de-allocate) component instances in the SPOF elimination system 100 of FIG. 1. The method includes: upon a determination that a distribution trigger has occurred (step 310), determining whether the distribution of component instances should be modified (step 350) based on: (i) the determined resource pool and the pool's associated network architecture (step 320); (ii) the determined application resource requirements (step 330); and (iii) a determined set of rules (step 340). The apparatus performing the method then determines the distribution of component instances upon the resources and allocates or de-allocates component instances (step 360) based upon the determination of whether the distribution of component instances should be modified.

In the method 300, the step 310 includes determining that a distribution trigger has occurred. Based on the trigger determination, the method either proceeds to steps 320, 330 and 340 or returns (step 395). The trigger may be any suitable event signaling that the distribution of component instances should be modified. For example, the trigger event may be: (a) periodically triggered at threshold intervals; (b) an initial resource allocation request (e.g., to startup an application); (c) a request for additional resources to grow application capacity; (d) a request for shrinkage of resources to shrink application capacity; (e) when migrating/reconfiguring cloud resources during XaaS operations, such as when consolidating/balancing VM loads or storage allocations across virtualized disk arrangements; (f) in preparation for maintenance actions on servers or infrastructure (e.g., before taking server(s) offline to upgrade firmware, hardware, or operating systems); (g) for routine operations, such as consolidating applications onto a smaller number of servers in low-usage periods (e.g., the middle of the night) so that excess capacity may be turned off to save money; (h) when activating/resuming VM snapshots; (i) when restarting/recovering/reallocating virtual resources (e.g., VM's, storage) following failure (e.g., creating a new component instance to replace one that died due to failure); (j) or the like. It should be appreciated that multiple trigger events may occur at the same time.

In the method 300, step 320 includes determining the resource pool and the resource pool's associated network architecture. In particular, a resource pool (e.g., resources 200 of FIG. 2) and the pool's associated network architecture (e.g., TOR switches 210, links 230, EOR switches 240, aggregation switches 250 and routers 260 of FIG. 2) are determined.

In the method 300, step 330 includes determining the application's resource requirements. In particular, the apparatus performing the method determines (i) the current allocation of resources for an application; and (ii) the current application resource requirements of the application. In some embodiments, the determination of the current allocation of resources may be based on the current distribution of component instances.

In the method 300, step 340 includes determining rules. In particular, anti-affinity rules provide the constraint requirements for distribution of the component instances to meet "no SPOF".

Advantageously, by applying anti-affinity rules to component instances, the apparatus performing the method may apply "no SPOF" requirements to various resources (e.g., persistent storage devices) even when two application instances are installed on independent hardware platforms.

In the method 300, step 350 includes determining whether the distribution of component instances should be modified, and if so, whether a "no SPOF" compliant distribution of component instances is possible. In particular, the determination is based on: (i) the resource pool and the pool's associated network architecture determined in step 320, (ii) the application resource requirements determined in step 330, (iii) and the rules determined in step 340.

It should be appreciated that the apparatus performing the method may analyze multiple distributions of an allocated or de-allocated component instance on one or more resources and that those resources may be resident in any number of data centers local or remote.

In the method 300, step 360 includes determining the distribution of component instances among the resources of the resource pool. Distribution may include, for example, determining the placement of newly created component instance(s) or rearranging the placement of existing component instance(s). In particular, the apparatus performing the method allocates or de-allocates the component instance(s) on resources in the resource pool based on: (i) the determined resource pool and associated network architecture; (ii) the determined application resource requirements; and (iii) the determined set of rules.

In some embodiments of step 320, the network architecture is represented in a machine parseable grammar. Advantageously, when the network architecture is stored in a machine parseable grammar, modifications to the network architecture may be done dynamically, allowing for dynamic growing and shrinking of network architectures. In some of these embodiments, the machine parseable grammar is a graph or logical relationship.

In some embodiments, step 320 further includes determining the network status. In particular, the status or state of network elements such as links, access nodes, edge nodes, network devices or the like may be determined. For example, the apparatus performing the method may determine the operational state and congestion level of links 230 of FIG. 2.

In some embodiments of the step 330, the current application resource requirements are based on an application request.

In some embodiments of the step 330, the current application resource requirements are based on usage measurements. In some of these embodiments, the apparatus performing the method monitors resource usage by the application. Further to this embodiment, if a monitored resource parameter (e.g., processing, bandwidth, memory or storage parameter) grows or shrinks beyond a threshold, a trigger event may occur and new application resource requirements based on the monitored resource usage may be determined. For example, if an application currently has an allocated 10G Bytes of storage and the monitored storage usage grows beyond a 10% spare capacity threshold, then the apparatus may determine that the current storage application resource requirement is 11G Bytes based on a predetermined allocation policy (e.g., increase storage in 1 G Byte increments when a usage thresholds is exceeded).

In some embodiments of step 340, anti-affinity rules are expressed in instance limit(s) (e.g., a requirement for "no SPOF" specifying a minimum number of available component instance(s)). In some of these embodiments, the instance limit is represented as n+k. Where "n" is the number of available component instances required to meet "no SPOF" requirements and "k" is the number of failure points that must tolerated to meet the "no SPOF" requirements. For example, assume that a component instance of type "A" is a virtual machine servicing a front end process for a web server and that each component instance of type "A" processes 30 requests per minute. If the application requires 300 requests to be processed every minute, then the application may require n=10 available component instances of type "A". Moreover, if the application must tolerate k=2 failures, then the apparatus performing the method may be required to distribute at least two redundant component instances of type "A" to service front end process requests in the event that two of the n=10 component instances are impacted by failure(s). For the purposes of simplicity, assume that none of the component instances of type "A" are impacted by the same failure.

In some embodiments of step 340, anti-affinity rules are expressed in resource limits (e.g., minimum threshold of storage, bandwidth, memory access delays or processing cycles) and the number of tolerated failures required (i.e., "k") in order to meet "no SPOF" requirements. For example, assume that a component instance of type "A" is a virtual machine servicing a front end process for a web server and that the application requires 300 requests to be processed every minute. Moreover, assume that the application requires a tolerance of k=2 failures. It should be appreciated that the application may not specify a number of tolerated failures and a default tolerance (e.g., k=1) may be used. In this example, any suitable configuration of component instances of type "A" may be used where there are sufficient available component instances of type "A" to service at least 300 front end processing requests after two failures. In a first example, there may be 10 component instances of type "A" capable of processing 30 requests per minute and 4 component instances of type "A" capable of processing 15 requests per minute. In this first example, a failure of two component instances of type "A" servicing 30 requests a minute would still leave available components instances of type "A" capable of servicing 300 requests per minute (i.e., 8*30 + 4*15 = 300). For the purposes of simplicity, assume that none of the component instances of type "A" are impacted by the same failure.

In some embodiments of step 340, an application may characterize the anti-affinity rules for achieving "no SPOF".

In some embodiments of step 340, the anti-affinity rules are represented in a machine parseable grammar. For example, a grammar for specifying the anti-affinity rules of virtual machine (e.g., processing+memory) and virtualized storage may be defined.

In some embodiments of the step 350, the determination whether a component instance may be allocated or de-allocated will be based on a set of failure points and their associated impacted component instances. Failure points are any suitable virtualized server, resource, network element, cooling or power component, or the like. For example, referring to FIG. 2, a failure of TOR switch 210-1-1 will impact all component instances allocated on any of resources 220-1-1-1 - 220-1-1-5 and any component instances allocated on, for example, any virtualized server (not shown for clarity) having component instances allocated on any of resources 220-1-1-1 - 220-1-1-5.

In some embodiments of the step 350, a failure point may be a redundant component. For example, referring to FIG. 2, if aggregation switch 250-1 fails, aggregation switch 250-2 may take over. However, if the redundant component (e.g., aggregation switch 250-2) does not have sufficient capacity to take over sufficient load to meet the anti-affinity rules, a "no SPOF" violation may occur.

In some embodiments, the step 350 includes enforcing at least a portion of the determined rules (step 340) during initial allocation, dynamic allocation or de-allocation, migration, recovery, or other service management actions.

In some embodiments of the step 350, when the apparatus performing the method is unable to allocate components instances without violating an application's anti-affinity rules (e.g., because the application is attempting to horizontally grow beyond the "no SPOF" capabilities of a particular data center), step 350 returns an appropriate error indicating that the requested horizontal growth is prohibited so the application must outgrow. It should be appreciated that different growth scenarios might have different "no SPOF" limits. For example, a data center might be able to host growth in persistent storage capacity without breaching "no SPOF" limits but may not be able to grow service capacity (i.e., allocate new VM instances) without breaching limits.

In some embodiments of the step 350 or 360, one or more of the component instances of the same type have different resource parameters such as differing storage, bandwidth, access delays or processing cycles parameters. For example, two component instances of a virtualized storage type may specify differing storage sizes or access delays.

In some embodiments of the step 360, the determination of the distribution of the component instances is based on at least one resource parameter of at least a portion of the component instances.

In some embodiments of the step 350 or 360, the determination of whether the distribution of components should be modified in step 350 or the determination of the distribution of component instances in step 360 may be further based on the network status determined in step 320. For example, the apparatus performing the method may determine in step 320 the operational state or congestion level of links 230 of FIG. 2.

In a first example of this network status embodiment, the apparatus performing the method may determine that the congestion level of link 230-1 of FIG. 2 may not allow sufficient capacity to service component instances residing on resources 220-1-1-1 - 220-1-1-5. In this example, embodiments of the determinations in step 350 or 360 may be based on a reduced resource capacity of one or more component instances resident on resources 220-1-1-1 - 220-1-1-5, where the reduced capacity of the one or more component instances is based on the congestion in link 230-1.

In a second example of this network status embodiment, the apparatus performing the method may determine that link 230-2 of FIG. 2 is out of service. In this second example, the determinations in step 350 or 360 may be based on EOR switch 240-1 no longer being served by redundant aggregation switch 250-2. As such, the determinations may be based on a reduced resource capacity of one or more component instances resident on resources 220-1-1-1 - 220-1-x-5 if it is determined that aggregation switch 250-1 is unable to provide sufficient capacity to service the component instances. Moreover, the determinations may be based on aggregation switch 250-1 being a single point of failure for component instances resident on resources 220-1-1-1 - 220-1-x-5 since the availability of aggregation switch 250-2 has been eliminated.

In some embodiments of the step 360, one or more of the current component instances may be deleted, modified or rearranged to different resources (e.g., in order to avoid "no SPOF" conditions). In some of these embodiments, the resource capacity of one or more component instances is reduced (e.g., modified) based on a determination that sufficient capacity is not available to service the one or more component instances (e.g., link congestion on link 230-1 as described above).

In some embodiments of the step 360, the apparatus performing the method creates two or more component instances to meet the application resource requirements. For example, a requirement to allocate 3G Bytes of storage may be satisfied by one component instance providing 3G Bytes of storage or one component instance providing 2G Bytes of storage and one component instance providing 1G Bytes of storage. In some of these embodiments, the allocation to more than one component instance is based on anti-affinity rules. In some of these embodiments, the allocation to more than one component instance is based on the capabilities or availabilities of resources in the system.

In some embodiments of the step 360, the component instance may be distributed on a newly instantiated virtualized server that does not violate one or more of the rules determined in step 340.

In some embodiments of the step 360, the de-allocation of a component instance may require one or more of the current component instances to be rearranged. For example, when a component instance is deleted due to lowered application resource requirements, (e.g., based on an application resource shrinkage request), one or more of the remaining component instances may be split across different resources in order to meet "no SPOF" requirements.

In some embodiments of the method 300, steps 320, 330, or 340 may be determined concurrently or some of the steps 320, 330 or 340 may be determined serially. For example, the spare capacity determined in step 330 may be determined concurrently with the determination of allocated resources in step 320 and the distribution determination of step 360 may be performed concurrently with the allocation or de-allocation determination of step 350.

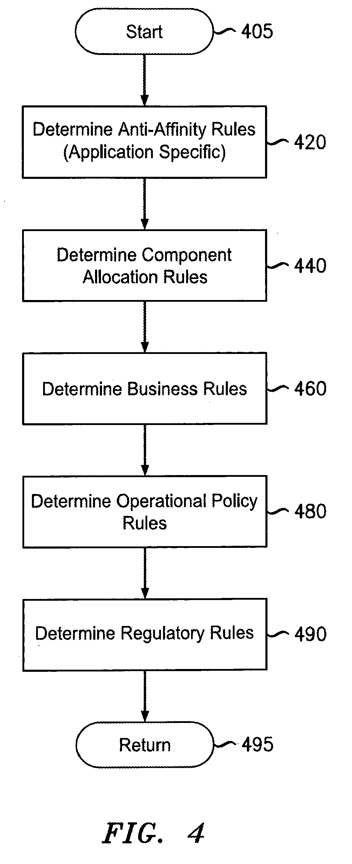

FIG. 4 depicts a flow chart illustrating an embodiment of a method 400 for a cloud manager (e.g., cloud manager 130 of FIG. 1) to determine rules as illustrated in step 340 of FIG. 3. The method includes determining anti-affinity rules (step 420), determining component allocation rules (step 440), determining business rules (step 460), determining operational policies (step 480) and determining regulatory rules (step 490).

In the method 400, the step 420 includes determining anti-affinity rules. In particular, as described above, anti-affinity rules describe the minimum quantity of resources that are required to be available to an application in order to meet "no SPOF" requirements.

The method 400 optionally includes step 440. Step 440 includes determining component allocation rules. In particular, component allocation rules describe the resource parameters of the component instance(s). For example, the type of component instance required (e.g., processing cores, virtual machines or virtualized storage) or the capabilities of the device (e.g., access delays, processing cycles or storage requirements).

The method 400 optionally includes step 460. Step 460 includes determining business rules that may impact the distribution of component instances in the system. In particular, business rules describe the resource constraints of the "no SPOF" system. In some of these embodiments, business rules may include: (1) resources identified for use in current or future maintenance activities; (2) resources reserved for future use; (3) resources reserved for one or more identified customers; and (4) the like.

The method 400 optionally includes step 480. Step 480 includes determining operational policy rules that impact the distribution of component instances. In particular, operational policy rules describe the application specific distribution requirements. In some of these embodiments, operational policy rules may include: (1) restrictions on allocation of component instances (e.g., component instances of a particular type may not be allocated in different data centers); (2); operational requirements (e.g., specifying a maximum access delay between component instances of differing types); (3) software licensing (or other commercial/financial) limit; or (4) the like.

The method 400 optionally includes step 490. Step 490 includes determining regulatory rules that impact the distribution of component instances. In particular, regulatory rules describe the regulatory resource constraints of the "no SPOF" system. In some of these embodiments, regulatory rules may include restrictions on geographic placement of component instances. For example, privacy laws may restrict storage of personal information outside of a geographic boundary or export control regulations may restrict storage of technical data outside of a geographic boundary.

In some embodiments of the method 400, steps 420, 440, 460, 480 or 490 may be determined or executed concurrently.

Although primarily depicted and described in a particular sequence, it should be appreciated that the steps shown in methods 300 and 400 may be performed in any suitable sequence. Moreover, the steps identified by one step may also be performed in one or more other steps in the sequence or common actions of more than one step may be performed only once.

It should be appreciated that steps of various above-described methods can be performed by programmed computers. Herein, some embodiments are also intended to cover program storage devices, e.g., data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable data storage media. The embodiments are also intended to cover computers programmed to perform said steps of the above-described methods.

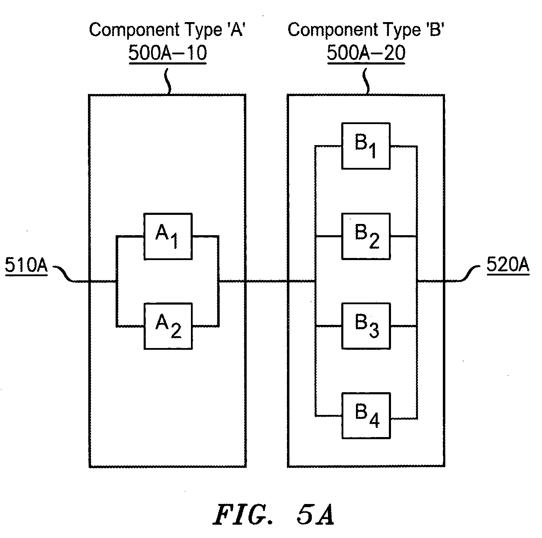

Referring to FIG. 3 and 5A-5D, an example of the distribution of application component instances in the SPOF elimination system 100 of FIG. 1 by cloud manager 130 of FIG. 1 is provided.

FIG. 5A illustrates a reliability block diagram of an exemplary two-tiered application requiring component instances of type "A" and type "B".
Component instances $A_1$ - $A_2$ are of component type 'A' 500A-10 and component instances $B_1$ - $B_4$ are of component type 'B' 500A-20 (collectively, component instances 500A. In particular, a process path between application process inflow 510A and application process outflow 520A is provided via component instances 500A. In order to meet "no SPOF" requirements, the process path requires component instances 500A to be distributed over resources based on rules determined in step 340 and applied in step 350 or 360 of FIG. 3. For example, if an anti-affinity rule requires at least one component instance of type "A" to be available after a single failure,

component instances $A_1$ and $A_2$ may not be impacted by the same failure point.

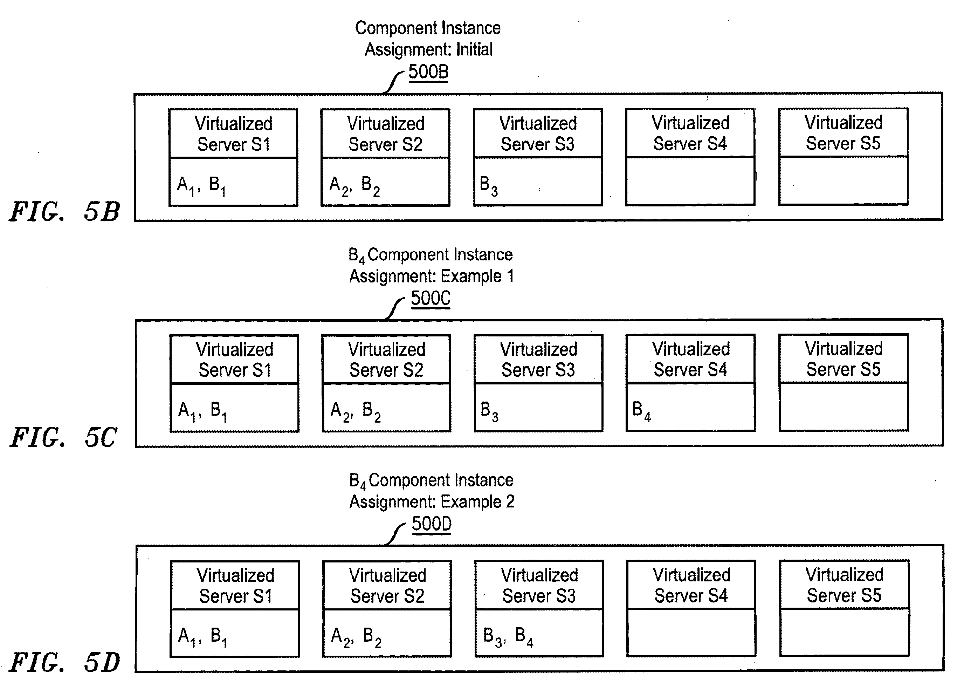

For purposes of the examples illustrated in FIGs. 5B - 5D, component instances of type "A" are front end processes (e.g., virtual machines) capable of serving 100 requests per minute and component instances of type "B" are back end processes (e.g., virtual machines) capable of serving 30 requests per minute.

Referring to FIG. 5B, an initial assignment of component instances $A_1$ - $A_2$ and $B_1$ - $B_3$ over virtualized servers S1 - S5 is illustrated (e.g., the determination of current allocation in step 320).

In this example, the determined rules (step 340) for user service to be fully available (i.e., with sufficient capacity to serve offered load with acceptable service quality) are:

(1) the system requires available front end processing to process 60 requests per minute;
(2) the system requires available back end processing to process 60 requests per minute; and
(3) the system shall meet "no SPOF" for one failure point.

It should be appreciated that the initial distribution of component instances in FIG. 5B satisfies the determined rules.

FIGs. 5C and 5D illustrate the assignment of component instance $B_4$ in two exemplary distributions of component instances 500A of FIG. 5A in response to an application growth request. In these examples, the updated determined rules (e.g., step 340 of FIG. 3) for user service to be fully available based on the application growth request are:

(1) the system requires available front end processing to process 90 requests per minute;
(2) the system requires available back end processing to process 90 requests per minute; and
(3) the system shall meet "no SPOF" for one failure point.

It should be appreciated that the initial distribution of component instances in FIG. 5B does not satisfy the updated determined rules and thus, the "no SPOF" requirement is not met with the current distribution of component instances. For example, if any of virtualized servers S1 - S3 fail, available component instances of type 'B' are only capable of servicing 60 requests per minute and thus, the requirement, "(2) the system requires available back end processing to process 90 requests per minute", is not met.

Referring to the distribution example of FIG. 5C, the distribution of component instances 500A across virtualized servers S1 - S5 meets the updated determined rules and thus, the distribution meets the "no SPOF" requirement. For example, as illustrated, if any one of virtualized servers S1 - S5 fails, available component instances of type 'A' are capable of servicing at least 90 requests per minute (e.g., either server can service 100 requests per minute) and available component instances of type 'B' are capable of servicing at least 90 requests per minute (e.g., the at least three component instances available after a failure can service 90 requests per minute). Thus, the method may determine that an allocation of component instance $B_4$ may be achieved (step 350) and allocate component instance $B_4$ to virtualized server S4 (step 360).

In contrast, referring to the distribution example of FIG. 5D, the distribution of component instances 500A across virtualized servers S1 - S5 does not meet the updated determined rules and thus, the distribution does not meet the SPOF requirements. As illustrated, if both $B_2$ and $B_3$ are hosted on Virtual Server S3, then failure of the virtualized server S3 violates the requirement, "(2) the system requires available back end processing to process 90 requests per minute", is not met.

It should be appreciated that an apparatus performing the method 300 may choose another distribution that does not violate the systems "no SPOF" requirements (e.g., the distribution of FIG. 5C) or the apparatus performing the method may determine that an allocation of a component instance (e.g., component instance $B_4$) may not be achieved using any distribution (step 450) and return (step 495).

Further to the example, the apparatus performing the method 300 may determine the network architecture (step 320). For example, referring to FIG. 2, the virtualized servers S1 - S4 of FIGs. 5B - 5D may reside on resources 220-1-1-1, 220-2-1-1, 220-y-1-1 and 220-y-2-1 respectively. In the network architecture of FIG. 2, resources 220-y-1-1 and 220-y-2-1 share a common EOR switch (e.g., EOR switch 240-y) and thus, a failure of EOR switch 240-y would impact the component instances resident on virtual servers S3 and S4 and thus, if component instance $B_4$ is placed on virtualized server S4, EOR switch 240-y will be a single point of failure that would violate the updated determined rules. In fact, distribution of component instance $B_4$ on any of resources S1 - S4 would violate the anti-affinity rules and thus, the "no SPOF" requirements. In some embodiments, the apparatus performing the method 300 may create a new virtualized server (e.g., S5) on a resource that does not violate the anti-affinity rules (e.g., resource 220-3-1-1) and distribute component instance $B_4$ to the newly created virtualized server. It should be appreciated that similar to the failure of a network device such as EOR switch 240-y, a link failure (e.g., link 230 of FIG. 2) may impact one or more resources (e.g., a failure of link 230 impacts resources 220-1-1-1 - 220-1-1-5).

In some embodiments, if the failure point is a redundant component such as aggregation switch 250-1, the capacity of the redundant device(s) (e.g., aggregation switch 250-2) will be required to be sufficient to meet the updated determined rules. In some of these embodiments, the determinations in step 350 or 360 of FIG. 3 are based on the adequacy of network bandwidth as described herein.

Referring back to FIG. 3, in some embodiments, the step 350 or 360 includes using conventional classical optimization techniques to determine whether and where a component instance may be distributed. Conventional classical optimization techniques involve determining the action that best achieves a desired goal or objective. An action that best achieves a goal or objective may be determined by maximizing or minimizing the value of an objective function. In some embodiments, the goal or metric of the objective function may be to minimize costs or to minimize application access delays.

The problem may be represented as:

Optimizing:

$$[E.1] \ y = f(x_1, x_2, \ldots, x_n)$$

Subject to:

$$[E.2] \ G_j(x_1, x_2, \ldots, x_n) \begin{Bmatrix} \leq \\ = \\ \geq \end{Bmatrix} b_j \quad j = 1, 2, \ldots m$$

Where the equation E.1 is the objective function and equation E.2 constitutes the set of constraints imposed on the solution. The $x_i$ variables, $x_1, x_2, \ldots, x_n$, represent the set of decision variables and $y = f(x_1, x_2, \ldots, x_n)$ is the objective function expressed in terms of these decision variables. It should be appreciated that the objective function may be maximized or minimized.

Referring back to FIGs. 5B - 5D, the placement of component instance $B_4$ may be determined using an objective function that minimizes access delays from another component instance. For example, if component instance type B is virtual storage and component instance type A is virtual machines (processing+memory), the objective function may be ∀ resources ∈ resource pool (e.g., resources 220 of FIG. 2), choose the resource for the distribution of the component instance $B_4$ as the resource that minimizes the average access delay between component instances of type A and the newly allocated component instance $B_4$. Some rules for the distribution of component instance $B_4$ may be:

(1) resource type = storage device;
(2) spare capacity ≥ requested allocation size;
(3) available storage capacity ≥ MinimumStorageSizeThreshold ∀ failure points; and
(4) access delay ≤ MaximumAccessDelayThreshold ∀ component instance type A.

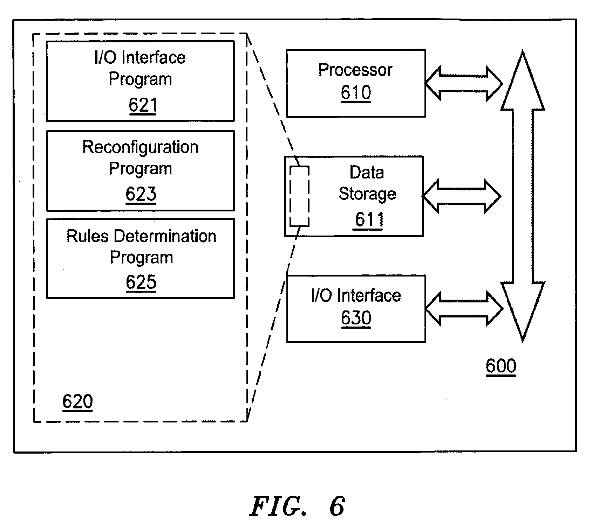

FIG. 6 schematically illustrates an embodiment of various apparatus 600 such as one of cloud manager 130 of FIG. 1. The apparatus 600 includes a processor 610, a data storage 611, and an I/O interface 630.

The processor 610 controls the operation of the apparatus 600. The processor 610 cooperates with the data storage 611.

The data storage 611 may store program data such as anti-affinity rules, component allocation rules, business rules, operational policy rules, or the like as appropriate. The data storage 611 also stores programs 620 executable by the processor 610.

The processor-executable programs 620 may include an I/O interface program 621, a reconfiguration program 623, or a rules determination program 625. Processor 610 cooperates with processor-executable programs 620.

The I/O interface 630 cooperates with processor 610 and I/O interface program 621 to support communications over communications channels 135 of FIG. 1 as described above.

The reconfiguration program 623 performs the steps of method(s) 400 of FIG. 4 as described above.

The rules determination program 625 performs the steps of method 500 of FIG. 5 as described above.

In some embodiments, the processor 610 may include resources such as processors / CPU cores, the I/O interface 630 may include any suitable network interfaces, or the data storage 611 may include memory or storage devices. Moreover the apparatus 600 may be any suitable physical hardware configuration such as: one or more server(s), blades consisting of components such as processor, memory, network interfaces or storage devices. In some of these embodiments, the apparatus 600 may include cloud network resources that are remote from each other.

In some embodiments, the apparatus 600 may be virtual machine. In some of these embodiments, the virtual machine may include components from different machines or be geographically dispersed. For example, the data storage 611 and the processor 610 may be in two different physical machines.

When processor-executable programs 620 are implemented on a processor 610, the program code segments combine with the processor to provide a unique device that operates analogously to specific logic circuits.

Although depicted and described herein with respect to embodiments in which, for example, programs and logic are stored within the data storage and the memory is communicatively connected to the processor, it should be appreciated that such information may be stored in any other suitable manner (e.g., using any suitable number of memories, storages or databases); using any suitable arrangement of memories, storages or databases communicatively connected to any suitable arrangement of devices; storing information in any suitable combination of memory(s), storage(s) or internal or external database(s); or using any suitable number of accessible external memories, storages or databases. As such, the term data storage referred to herein is meant to encompass all suitable combinations of memory(s), storage(s), and database(s).

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated that any block diagrams herein represent conceptual views of illustrative circuitry embodying the principles of the invention. Similarly, it should be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An apparatus (600) for providing single point of failure elimination, the apparatus (600) comprising:

a data storage (611); and
a processor (610) communicatively connected to the data storage (611), the processor (610) being configured to:

determine that a distribution trigger has occurred;
determine (330) one or more application resource requirements;
determine (320) a resource pool, the resource pool comprising a plurality of resources;
determine a network architecture associated with the resource pool, the network architecture comprising one or more switches, one or more routers or one or more links;
determine a plurality of failure points corresponding to the one or more switches, the one or more routers or the one or more links;
for each of a plurality of the determined failure points, determine one or more corresponding impacted component instances, the one or more corresponding impacted component instances comprising one or more of the plurality of resources;
determine (340) one or more rules, the one or more rules comprising constraint requirements associated with the single point of failure elimination; and
determine (360) a distribution of one or more component instances that meet the constraint requirements based on the one or more application resource requirements and the plurality of failure points and corresponding one or more associated impacted component instances.

2. The apparatus (600) of claim 1, wherein the network architecture includes links and network nodes; and wherein the processor (610) is further configured to:

determine a network status of one or more of the links and nodes;
wherein the determination of the distribution of the one or more component instances is further based on the network status.

3. The apparatus (600) of claim 1, wherein the one or more application resource requirements includes a current allocation of one or more resources, the one or more resources being members of the resource pool; and one or more current application resource requirements, the one or more current application resource requirements associated with an application.

4. The apparatus (600) of claim 1, wherein the one or more rules include one or more anti-affinity rules.

**5.** The apparatus (600) of claim 4, wherein the one or more rules further include one or more business rules; and
wherein the one or more business rules include a reservation of a portion of resources in the resource pool for maintenance actions.

**6.** The apparatus (600) of claim 1, wherein the determination of the distribution of one or more component instances is further based on a set of failure points.

**7.** The apparatus (600) of claim 1, wherein at least a portion of the plurality of failure points is a network element.

**8.** The apparatus (600) of claim 7, wherein the network element is selected from the group consisting of a TOR switch (210) and an aggregation switch (250), said TOR switch switching data between resources in an associated rack and an associated exclusive or switch.

**9.** A method (300) for providing single point of failure elimination, the method comprising:

at a processor (610) communicatively connected to a data storage (611), determining (310) that a distribution trigger has occurred;
determining (330), by the processor (610) in cooperation with the data storage (611), one or more application resource requirements;
determining (320), by the processor (610) in cooperation with the data storage (611), a resource pool, the resource pool comprising a plurality of resources;
determining, by the processor (610) in cooperation with the data storage (611), a network architecture associated with the resource pool, the network architecture comprising one or more switches, one or more routers or one or more links;
determining, by the processor (610) in cooperation with the data storage (611), a plurality of failure points corresponding to the one or more switches, the one or more routers or the one or more links;
for each of a plurality of the determined failure points, determining, by the processor (610) in cooperation with the data storage (611), one or more corresponding impacted component instances, the one or more corresponding impacted component instances comprising one or more of the plurality of resources;
determining, by the processor (610) in cooperation with the data storage (611), one or more rules, the one or more rules comprising constraint requirements associated with the single point of failure elimination; and
determining (360), by the processor (610) in cooperation with the data storage (611), a distribution of one or more component instances that meet the constraint requirements based on the one or more application resource requirements and the plurality of failure points and corresponding one or more associated impacted component instances.

**10.** The method (300) of claim 9, wherein the distribution trigger is based on migrating at least a portion of the component instances from one or more resources in the resource pool.

**11.** The method (300) of claims 9, wherein the method (300) further comprises:

determining, by the processor (610) in cooperation with the data storage (611), a network status of one or more links or network nodes;
wherein the network architecture comprises the one or more links or network nodes; and
wherein the step of determining the distribution of the one or more component instances is further based on the network status.

**12.** The method (300) of claim 9, wherein the network architecture comprises a first network device; and
wherein the step of determining the distribution of one or more component instances comprises:

determining that a first component instance of the one or more component instances may not be associated with a first resource in the resource pool based on determining that a failure of the first network device would violate at least one of the one or more anti-affinity rules.

**Patentansprüche**

**1.** Vorrichtung (600) zum Bereitstellen einer Single Point of Failure-Beseitigung, wobei die Vorrichtung (600) Folgendes umfasst:

einen Datenspeicher (611); und
einen Prozessor (610), der mit dem Datenspeicher (611) kommunikativ verbunden ist, wobei der Prozessor (610) ausgelegt ist zum:

Bestimmen, dass ein Verteilungsauslöser erfolgte;
Bestimmen (330) einer oder mehrerer Anwendungsressourcenanforderungen;
Bestimmen (320) eines Ressourcenpools, wobei der Ressourcenpool eine Vielzahl von Ressourcen umfasst;

Bestimmen einer Netzwerkarchitektur zugehörig zum Ressourcenpool, wobei die Netzwerkarchitektur einen oder mehrere Switches, einen oder mehrere Router oder eine oder mehrere Verbindungen umfasst; Bestimmen einer Vielzahl von Schwachstellen entsprechend dem einen oder den mehreren Switches, dem einen oder den mehreren Routern oder der einen oder mehreren Verbindungen; für jede von einer Vielzahl der bestimmten Schwachstellen, Bestimmen einer oder mehrerer entsprechender beeinträchtigter Komponenteninstanzen, wobei die eine oder mehreren entsprechenden beeinträchtigten Komponenteninstanzen eine oder mehrere der Vielzahl von Ressourcen umfassen; Bestimmen (340) einer oder mehrerer Regeln, wobei die eine oder mehreren Regeln Bedingungsanforderungen zugehörig zur Single Point of Failure-Beseitigung umfassen; und Bestimmen (360) einer Verteilung einer oder mehrerer Komponenteninstanzen, welche die Bedingungsanforderungen erfüllen, basierend auf der einen oder den mehreren Anwendungsressourcenanforderungen und der Vielzahl von Schwachstellen und der einen oder den mehreren entsprechenden zugehörigen beeinträchtigten Komponenteninstanzen.

2.  Vorrichtung (600) nach Anspruch 1, wobei die Netzwerkarchitektur Verbindungen und Netzwerkknoten umfasst; und wobei der Prozessor (610) weiterhin ausgelegt ist zum:

    Bestimmen eines Netzwerkstatus eines oder mehrerer der Verbindungen und Knoten; wobei die Bestimmung der Verteilung der einen oder mehreren Komponenteninstanzen weiterhin auf dem Netzwerkstatus basiert.

3.  Vorrichtung (600) nach Anspruch 1, wobei die eine oder mehreren Anwendungsressourcenanforderungen eine aktuelle Zuweisung von einer oder mehreren Ressourcen umfassen, wobei die eine oder mehreren Ressourcen Teile des Ressourcenpools sind; und eine oder mehrere aktuelle Anwendungsressourcenanforderungen, wobei die eine oder mehreren aktuellen Anwendungsressourcenanforderungen einer Anwendung zugehörig sind.

4.  Vorrichtung (600) nach Anspruch 1, wobei die eine oder mehreren Regeln eine oder mehrere Anti-Affinitätsregeln umfassen.

5.  Vorrichtung (600) nach Anspruch 4, wobei die eine oder mehreren Regeln weiterhin eine oder mehrere Geschäftsregeln umfassen; und wobei die eine oder mehreren Geschäftsregeln eine Reservierung einer Menge von Ressourcen im Ressourcenpool für Wartungsaktionen umfassen.

6.  Vorrichtung (600) nach Anspruch 1, wobei die Bestimmung der Verteilung einer oder mehrerer Komponenteninstanzen weiterhin auf einer Gruppe von Schwachstellen basiert.

7.  Vorrichtung (600) nach Anspruch 1, wobei mindestens eine Menge der Vielzahl von Schwachstellen ein Netzwerkelement ist.

8.  Vorrichtung (600) nach Anspruch 7, wobei das Netzwerkelement ausgewählt wird aus der Gruppe bestehend aus einem ToR-Switch (210) und einem Aggregations-Switch (250), wobei besagter ToR-Switch Daten zwischen Ressourcen in einem zugehörigen Gestell und einer zugehörigen Exklusiv-ODER-Schaltung vermittelt.

9.  Verfahren (300) zum Bereitstellen einer Single Point of Failure-Beseitigung, wobei das Verfahren Folgendes umfasst:

    an einem Prozessor (610), der mit einem Datenspeicher (611) kommunikativ verbunden ist, Bestimmen (310), dass ein Verteilungsauslöser erfolgte; Bestimmen (330), durch den Prozessor (610) in Zusammenarbeit mit dem Datenspeicher (611), einer oder mehrerer Anwendungsressourcenanforderungen; Bestimmen (320), durch den Prozessor (610) in Zusammenarbeit mit dem Datenspeicher (611), eines Ressourcenpools, wobei der Ressourcenpool eine Vielzahl von Ressourcen umfasst; Bestimmen, durch den Prozessor (610) in Zusammenarbeit mit dem Datenspeicher (611), einer Netzwerkarchitektur zugehörig zum Ressourcenpool, wobei die Netzwerkarchitektur einen oder mehrere Switches, einen oder mehrere Router oder eine oder mehrere Verbindungen umfasst; Bestimmen, durch den Prozessor (610) in Zusammenarbeit mit dem Datenspeicher (611), einer Vielzahl von Schwachstellen entsprechend dem einen oder den mehreren Switches, dem einen oder den mehreren Routern oder der einen oder mehreren Verbindungen; für jede von einer Vielzahl der bestimmten Schwachstellen, Bestimmen, durch den Prozessor (610) in Zusammenarbeit mit dem Datenspeicher (611), einer oder mehrerer entsprechender beeinträchtigter Komponenteninstanzen, wobei die eine oder mehreren entsprechenden beeinträchtigten Komponenteninstanzen eine oder mehrere der Vielzahl von Ressourcen umfassen;

Bestimmen, durch den Prozessor (610) in Zusammenarbeit mit dem Datenspeicher (611), einer oder mehrerer Regeln, wobei die eine oder mehreren Regeln Bedingungsanforderungen zugehörig zur Single Point of Failure-Beseitigung umfassen; und

Bestimmen (360), durch den Prozessor (610) in Zusammenarbeit mit dem Datenspeicher (611), einer Verteilung einer oder mehrerer Komponenteninstanzen, welche die Bedingungsanforderungen erfüllen, basierend auf der einen oder den mehreren Anwendungsressourcenanforderungen und der Vielzahl von Schwachstellen und der einen oder den mehreren entsprechenden zugehörigen beeinträchtigten Komponenteninstanzen.

10. Verfahren (300) nach Anspruch 9, wobei der Verteilungsauslöser auf der Migration mindestens einer Menge der Komponenteninstanzen aus einer oder mehreren Ressourcen im Ressourcenpool basiert.

11. Verfahren (300) nach Anspruch 9, wobei das Verfahren (300) weiterhin Folgendes umfasst:

Bestimmen, durch den Prozessor (610) in Zusammenarbeit mit dem Datenspeicher (611), eines Netzwerkstatus einer oder mehrerer Verbindungen oder Netzwerkknoten;

wobei die Netzwerkarchitektur die eine oder mehreren Verbindungen oder Netzwerkknoten umfasst; und

wobei der Schritt des Bestimmens der Verteilung der einen oder mehreren Komponenteninstanzen weiterhin auf dem Netzwerkstatus basiert.

12. Verfahren (300) nach Anspruch 9, wobei die Netzwerkarchitektur eine erste Netzwerkvorrichtung umfasst; und wobei der Schritt des Bestimmens der Verteilung einer oder mehrerer Komponenteninstanzen Folgendes umfasst:

Bestimmen, dass eine erste Komponenteninstanz der einen oder mehreren Komponenteninstanzen nicht einer ersten Ressource im Ressourcenpool zugehörig sein kann, basierend auf der Bestimmung, dass ein Fehler der ersten Netzwerkvorrichtung mindestens eine der einen oder mehreren Anti-Affinitätsregeln verletzen würde.

## Revendications

1. Appareil (600) destiné à fournir une élimination des points de défaillance uniques, l'appareil (600) comprenant :

un stockage de données (611) ; et
un processeur (610) connecté de manière communicative au stockage de données (611), le processeur (610) étant configuré pour :

déterminer qu'un déclenchement de distribution s'est produit ;
déterminer (330) une ou plusieurs exigences de ressources d'application ;
déterminer (320) un ensemble de ressources, l'ensemble de ressources comprenant une pluralité de ressources ;
déterminer une architecture réseau associée à l'ensemble de ressources, l'architecture réseau comprenant un ou plusieurs commutateurs, un ou plusieurs routeurs ou une ou plusieurs liaisons ;
déterminer une pluralité de points de défaillance correspondant à un ou plusieurs commutateurs, un ou plusieurs routeurs ou une ou plusieurs liaisons ;
pour chacun d'une pluralité des points de défaillance déterminés, déterminer une ou plusieurs instances de composantes impactées correspondantes, la ou les instances de composants impactés correspondantes comprenant une ou plusieurs de la pluralité de ressources ;
déterminer (340) une ou plusieurs règles, la ou les règles comprenant des exigences de contrainte associées à l'élimination des points de défaillance uniques ; et
déterminer (360) une distribution d'une ou plusieurs instances de composants qui satisfont aux exigences de contrainte sur la base de la ou des exigences de ressources d'application et la pluralité de points de défaillance et la ou les instances de composants impactés associés correspondantes.

2. Appareil (600) selon la revendication 1, dans lequel l'architecture réseau comprend des liaisons et des noeuds de réseau ; et
dans lequel le processeur (610) est en outre configuré pour :

déterminer un statut de réseau d'un ou plusieurs des liaisons et noeuds ;
dans lequel la détermination de la distribution de la ou des instances de composants est en outre basée sur le statut du réseau.

**3.** Appareil (600) selon la revendication 1, dans lequel la ou les exigences de ressources d'application inclue(nt) une allocation actuelle d'une ou plusieurs ressources, la ou les ressources étant membres de l'ensemble de ressources ; et une ou plusieurs exigences de ressources d'applications actuelles, la ou les exigences de ressources d'application actuelles étant associée(s) à une application.

**4.** Appareil (600) selon la revendication 1, dans lequel la ou les règles incluent une ou des règles anti-affinité.

**5.** Appareil (600) selon la revendication 4, dans lequel la ou les règles incluent en outre une ou plusieurs règles de conduite ; et
dans lequel la ou les règles de conduite incluent une réservation d'une partie des ressources dans l'ensemble de ressources pour des actions de maintenance.

**6.** Appareil (600) selon la revendication 1, dans lequel la détermination de la distribution d'une ou plusieurs instances de composants est en outre basée sur un ensemble de points de défaillance.

**7.** Appareil (600) selon la revendication 1 dans lequel au moins une partie de la pluralité de points de défaillance est un élément de réseau.

**8.** Appareil (600) selon la revendication 7, dans lequel l'élément de réseau est sélectionné dans le groupe comprenant un commutateur TOR (210) et un commutateur d'agrégation (250), ledit commutateur TOR commutant les données entre des ressources dans un rack associé et un commutateur OR exclusif associé.

**9.** Procédé (300) destiné à fournir une élimination des points de défaillance uniques, le procédé comprenant :

sur un processeur (610) connecté de manière communicative à un stockage de données (611), la détermination (310) qu'un déclenchement de distribution s'est produit ;
la détermination (330), par le processeur (610) en coopération avec le stockage de données (611), d'une ou plusieurs exigences de ressources d'application ;
la détermination (320), par le processeur (610) en coopération avec le stockage de données (611), d'un ensemble de ressources, l'ensemble de ressources comprenant une pluralité de ressources ;
la détermination, par le processeur (610) en coopération avec le stockage de données (611), d'une architecture réseau associée à l'ensemble de ressources, l'architecture réseau comprenant un ou plusieurs commutateurs, un ou plusieurs routeurs ou une ou plusieurs liaisons ;
la détermination, par le processeur (610) en coopération avec le stockage de données (611), d'une pluralité de points de défaillance correspondant au(x) commutateur(s), routeur(s) ou liaison(s) ;
pour chacun de la pluralité de points de défaillance déterminés, la détermination, par le processeur (610) en coopération avec le stockage de données (611), d'une ou plusieurs instances de composants impactés correspondantes, la ou les instances de composants impactés correspondantes comprenant une ou plusieurs ressources de la pluralité de ressources ;
la détermination, par le processeur (610) en coopération avec le stockage de données (611), d'une ou plusieurs règles, la ou les règles comprenant des exigences de contrainte associées à l'élimination des points de défaillance uniques ; et
la détermination (360), par le processeur (610) en coopération avec le stockage de données (611), d'une distribution d'une ou plusieurs instances de composants qui satisfait aux exigences de contrainte sur la base d'une ou plusieurs exigences de ressources d'application et de la pluralité de points de défaillance et la ou les instances de composants impactés associés correspondante(s).

**10.** Procédé (300) selon la revendication 9, dans lequel le déclenchement de distribution est basé sur la migration d'au moins une partie des instances de composants d'une ou plusieurs ressources dans l'ensemble de ressources.

**11.** Procédé (300) selon la revendication 9, dans lequel le procédé (300) comprend en outre :

la détermination, par le processeur (610) en coopération avec le stockage de données (611) d'un statut de réseau d'une ou plusieurs liaisons ou noeuds de réseau ;
dans lequel l'architecture réseau comprend la ou les liaisons ou noeuds de réseau ; et
dans lequel l'étape de détermination de la distribution de la ou des instances de composants est en outre basée sur le statut du réseau.

**12.** Procédé (300) de la revendication 9, dans lequel l'architecture réseau comprend un premier dispositif de réseau ; et dans lequel l'étape de détermination de la distribution d'une ou plusieurs instances de composants comprend :

la détermination qu'une première instance de composant de la ou des instances de composants peut ne pas être associée à une première ressource dans l'ensemble de ressources sur la base de la détermination qu'une défaillance du premier dispositif de réseau violerait au moins une de la ou des règles anti-affinité.

**FIG. 1**

FIG. 2

FIG. 3

EP 2 856 318 B1

FIG. 4

Component Type 'A'
500A-10

Component Type 'B'
500A-20

B$_1$

B$_2$

A$_1$

510A

520A

A$_2$

B$_3$

B$_4$

*FIG. 5A*

Component Instance
Assignment: Initial

*500B*

| Virtualized Server S1 | Virtualized Server S2 | Virtualized Server S3 | Virtualized Server S4 | Virtualized Server S5 |
|---|---|---|---|---|
| $A_1$, $B_1$ | $A_2$, $B_2$ | $B_3$ | | |

*FIG. 5B*

$B_4$ Component Instance
Assignment: Example 1

*500C*

| Virtualized Server S1 | Virtualized Server S2 | Virtualized Server S3 | Virtualized Server S4 | Virtualized Server S5 |
|---|---|---|---|---|
| $A_1$, $B_1$ | $A_2$, $B_2$ | $B_3$ | $B_4$ | |

*FIG. 5C*

$B_4$ Component Instance
Assignment: Example 2

*500D*

| Virtualized Server S1 | Virtualized Server S2 | Virtualized Server S3 | Virtualized Server S4 | Virtualized Server S5 |
|---|---|---|---|---|
| $A_1$, $B_1$ | $A_2$, $B_2$ | $B_3$, $B_4$ | | |

*FIG. 5D*

EP 2 856 318 B1

FIG. 6

**EP 2 856 318 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110265168 A1